# EUROPEAN PATENT APPLICATION

(11) **EP 4 814 892 A1**
(43) Date of publication of application: **30.09.2026**
(21) Application number: 26166332.2
(22) Date of filing: 20.03.2026
(51) Int. Cl.: G06V 10/80, G06V 10/82

(54) **IMAGE PROCESSING METHOD AND APPARATUS, COMPUTER-READABLE STORAGE MEDIUM, AND ELECTRONIC DEVICE**

(30) Priority: 25.03.2025 CN 202510373457
(71) Applicant: Shenzhen D-Robotics Co., Ltd., Shenzhen 518055 (CN)
(72) Inventor: LIANG, Wenliang, SHENZHEN, 518055 (CN); SUI, Wei, SHENZHEN, 518055 (CN); HE, Yonghao, SHENZHEN, 518055 (CN); TAO, Jun, SHENZHEN, 518055 (CN)
(74) Representative: v. Bezold & Partner Patentanwälte - PartG mbB

(57) **Abstract**

Disclosed are an image processing method and apparatus, a computer-readable storage medium, and an electronic device. The method includes: acquiring an image to be processed; performing, sequentially through a plurality of feature extraction layers in a feature point extraction model, layer-by-layer feature extraction on the image to be processed, to obtain image feature maps output respectively from the feature extraction layers; performing, through a plurality of feature fusion layers in the feature point extraction model, layer-by-layer feature fusion on the image feature maps output respectively from the feature extraction layers, to obtain a fused feature map; and performing feature point extraction on the fused feature map, and determining a target feature point in the image to be processed and a descriptor corresponding to the target feature point.

## Description

The present disclosure relates to the field of image processing technologies, and in particular, to an image processing method and apparatus, a computer-readable storage medium, and an electronic device.

### BACKGROUND

In intelligent driving technology, fast and accurate extraction of feature points from an image is an important prerequisite for camera pose estimation and environmental map construction, and is a key link in implementing tasks such as object detection, tracking, and positioning.

Therefore, there is an urgent need for an image feature point extraction method capable of achieving high computational precision.

### SUMMARY

To solve the above technical problems, the present disclosure provides an image processing method and apparatus, a computer-readable storage medium, and an electronic device, capable of improving the computational precision of feature point extraction.

A first aspect of the present disclosure provides an image processing method, comprising: acquiring an image to be processed; performing, sequentially through a plurality of feature extraction layers in a feature point extraction model, layer-by-layer feature extraction on the image to be processed, to obtain image feature maps output respectively from the feature extraction layers; performing, through a plurality of feature fusion layers in the feature point extraction model, layer-by-layer feature fusion on the image feature maps output respectively from the feature extraction layers, to obtain a fused feature map; and performing feature point extraction on the fused feature map, and determining a target feature point in the image to be processed and a descriptor corresponding to the target feature point.

A second aspect of the present disclosure provides an image processing apparatus, comprising: an image acquiring module, configured to acquire an image to be processed; a feature extraction module, configured to perform, sequentially through a plurality of feature extraction layers in a feature point extraction model, layer-by-layer feature extraction on the image to be processed, to obtain image feature maps output respectively from the feature extraction layers; a feature fusion module, configured to perform, through a plurality of feature fusion layers in the feature point extraction model, layer-by-layer feature fusion on the image feature maps output respectively from the feature extraction layers, to obtain a fused feature map; and a feature point extraction module, configured to perform feature point extraction on the fused feature map, and determine a target feature point in the image to be processed and a descriptor corresponding to the target feature point.

A third aspect of the present disclosure provides a computer-readable storage medium, storing a computer program, wherein the computer program is configured to execute the image processing method provided in the first aspect.

A fourth aspect of the present disclosure provides an electronic device, comprising: a processor; and a memory, configured to store processor-executable instructions, wherein the processor is configured to read the executable instructions from the memory, and execute the instructions to implement the image processing method provided in the first aspect.

A fifth aspect of the present disclosure provides a computer program product, wherein when instructions in the computer program product are executed by a processor, the image processing method provided in the first aspect is executed.

In embodiments of the present disclosure, an electronic device acquires an image to be processed, and performs, sequentially through a plurality of feature extraction layers in a feature point extraction model, layer-by-layer feature extraction on the image to be processed, to obtain image feature maps output respectively from the feature extraction layers. Then, the electronic device performs, through a plurality of feature fusion layers in the feature point extraction model, layer-by-layer feature fusion on the image feature maps output respectively from the feature extraction layers, to obtain a fused feature map, and performs feature point extraction on the fused feature map, and determines a target feature point in the image to be processed and a descriptor corresponding to the target feature point. In this way, by performing layer-by-layer feature fusion on the image feature maps output respectively from the feature extraction layers, a fused feature map is obtained, thereby retaining feature information in the image feature maps output respectively from the feature extraction layers at different levels, thus improving the computational precision of feature point extraction.

### BRIEF DESCRIPTION OF DRAWINGS

FIG. 1 is a schematic structural diagram of a feature point extraction model according to an exemplary embodiment of the present disclosure.
FIG. 2 is a schematic flowchart of an image processing method according to an exemplary embodiment of the present disclosure.
FIG. 3 is a schematic flowchart of an image processing method according to another exemplary embodiment of the present disclosure.
FIG. 4 is a schematic flowchart of an image processing method according to another exemplary embodiment of the present disclosure.
FIG. 5 is a schematic flowchart of an image processing method according to another exemplary embodiment of the present disclosure.
FIG. 6 is a schematic structural diagram of an image processing apparatus according to an exemplary embodiment of the present disclosure.
FIG. 7 is a schematic structural diagram of an image processing apparatus according to another exemplary embodiment of the present disclosure.
FIG. 8 is a schematic structural diagram of an image processing apparatus according to another exemplary embodiment of the present disclosure.
FIG. 9 is a schematic structural diagram of an image processing apparatus according to another exemplary embodiment of the present disclosure.
FIG. 10 is a structural diagram of an electronic device according to an exemplary embodiment of the present disclosure.

### DETAILED DESCRIPTION OF THE EMBODIMENTS

In order to explain the present disclosure, exemplary embodiments of the present disclosure will be described in detail below with reference to the accompanying drawings. Obviously, the described embodiments are only part, not all, of embodiments of the present disclosure. It should be understood that the present disclosure is not limited by the exemplary embodiments.

It should be noted that: unless otherwise specifically stated, the relative arrangement of components and steps, numerical expressions and numerical values set forth in these embodiments do not limit the scope of the present disclosure.

### Disclosure Overview

Intelligent driving described in the present disclosure can cover a plurality of fields such as autonomous driving, assisted driving, and robot systems. Autonomous driving technology aims to achieve fully self-driving of intelligent vehicles under various complex road conditions without human intervention, also known as unmanned driving, which is an advanced form of intelligent driving. Assisted driving provides, through a series of sensors and algorithms, drivers with real-time road condition information, warnings, and partial driving operation support, such as automatic parking, adaptive cruise control, etc., aiming to improve driving safety and convenience. Robot systems extend intelligent driving technology to fields such as service robots and industrial robots, enabling robots to autonomously navigate in complex environments, avoid obstacles, and perform specific tasks, such as logistics distribution, warehouse management, etc., demonstrating a wide range of potential applications of intelligent driving technology in different scenarios.

In intelligent driving technology, fast and accurate extraction of feature points from an image is an important prerequisite for camera pose estimation and environmental map construction, and is a key link in implementing tasks such as object detection, tracking, and positioning. An intelligent driving device implements feature point extraction mainly by executing a feature point extraction algorithm through a graphics processing unit.

However, traditional image feature point extraction algorithms (such as SIFT, SURF, ORB, etc.) require a large amount of computational resources, where running a large amount of computation on the graphics processing unit of the intelligent driving device faces significant performance bottlenecks, thereby leading to low efficiency of feature point extraction. In addition, there are problems of precision loss and low runtime efficiency for deep learning-based image feature point extraction algorithms (such as SuperPoint) when computation is performed based on graphics processing units. For example, in the SuperPoint algorithm, the size of a feature map output from a decoder is 1/8 of the size of an image to be processed, and the feature map output from the decoder needs to be upsampled using a grid sample operator, to obtain a feature map of the same size as the image to be processed. During upsampling, pixel values need to be estimated based on interpolation methods, thereby leading to precision loss. Meanwhile, some operators in the SuperPoint algorithm (such as where, topK, reshape, etc.) have low runtime efficiency on graphics processing units.

To solve the above technical problems, embodiments of the present disclosure provide an image processing method, wherein an electronic device acquires an image to be processed, and performs, sequentially through a plurality of feature extraction layers in a feature point extraction model, layer-by-layer feature extraction on the image to be processed, to obtain image feature maps output respectively from the feature extraction layers. Then, the electronic device performs, through a plurality of feature fusion layers in the feature point extraction model, layer-by-layer feature fusion on the image feature maps output respectively from the feature extraction layers, to obtain a fused feature map, and performs feature point extraction on the fused feature map, and determines a target feature point in the image to be processed and a descriptor corresponding to the target feature point. In this way, by performing layer-by-layer feature fusion on the image feature maps output respectively from the feature extraction layers, a fused feature map is obtained, thereby retaining feature information in the image feature maps output respectively from the feature extraction layers at different levels, thus improving the computational precision of feature point extraction.

### Exemplary System

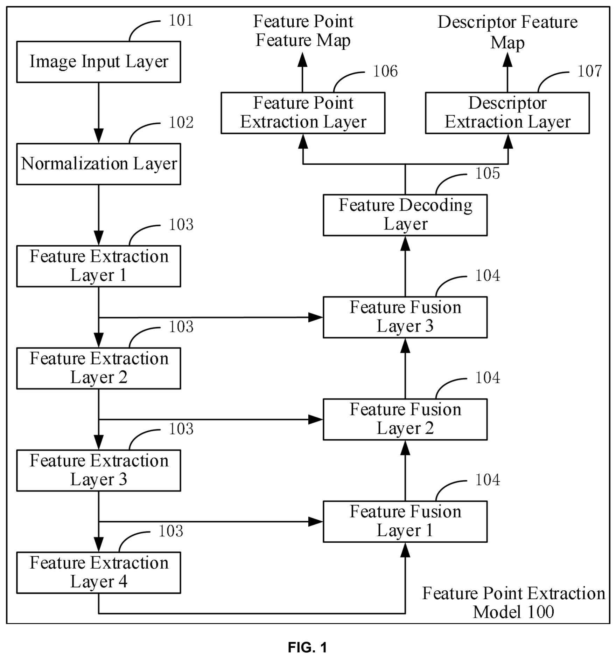

FIG. 1 is a schematic structural diagram of a feature point extraction model according to an exemplary embodiment of the present disclosure. As shown in FIG. 1, the feature point extraction model 100 includes an image input layer 101, a normalization layer 102, a plurality of feature extraction layers 103 (i.e., feature extraction layers 1 to 4 in FIG. 1), a plurality of feature fusion layers 104 (i.e., feature fusion layers 1 to 3 in FIG. 1), a feature decoding layer 105, a feature point extraction layer 106, and a descriptor extraction layer 107.

The image input layer 101 is configured to receive a raw image. The normalization layer 102 is configured to convert the raw image into a normalized image. The plurality of feature extraction layers 103 are configured to perform layer-by-layer feature extraction on the normalized image sequentially, and the feature extraction layers 103 respectively output image feature maps that have different scales and/or different numbers of channels. The plurality of feature fusion layers 104 are configured to sequentially perform upsampling and layer-by-layer feature fusion on the image feature maps output respectively from the feature extraction layers 103, to output a fused feature map. The feature decoding layer 105 is configured to perform further upsampling on the fused feature map, to output a fused feature map of the same size as the normalized image. The feature point extraction layer 106 is configured to perform feature point extraction on the fused feature map, to output a feature point feature map. The descriptor extraction layer 107 is configured to perform descriptor extraction on the fused feature map, to output a descriptor feature map, the feature point feature map and the descriptor feature map being for subsequently determining a feature point in the raw image and a descriptor corresponding to the feature point.

It should be noted that, in the feature point extraction model 100, the number of feature extraction layers 103 is not limited to 4, and the number of feature fusion layers 104 is not limited to 3, where those skilled in the art may comprehensively consider factors such as computational resources and power consumption of a graphics processing unit, as well as speed and precision of feature point extraction, thereby to set the number of feature extraction layers 103 and the number of feature fusion layers 104 in the feature point extraction model 100. Embodiments of the present disclosure are described taking the feature point extraction model 100 containing 4 feature extraction layers 103 and 3 feature fusion layers 104 as an example, with other cases being similar thereto and not elaborated.

### Exemplary Method

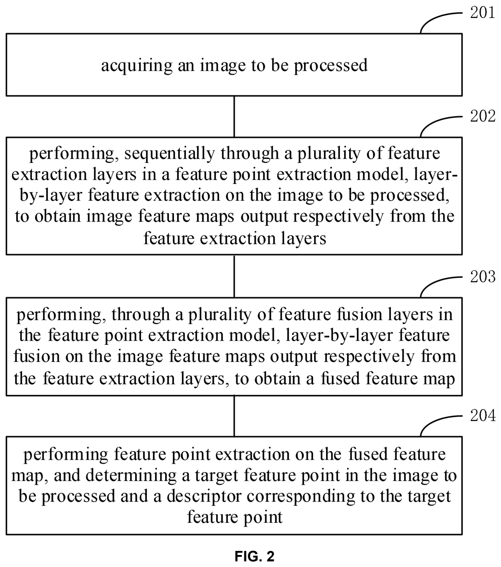

FIG. 2 is a schematic flowchart of an image processing method according to an exemplary embodiment of the present disclosure. The embodiment is applicable to an electronic device. As shown in FIG. 2, the method includes steps as follows.

### Step 201, Acquiring an image to be processed

Exemplarily, referring to FIG. 1, the electronic device acquires an image to be processed, and inputs the image to be processed into the image input layer in the feature point extraction model. The image to be processed may be a raw image acquired by an intelligent driving vehicle through an image sensor at a current moment or a historical moment, and may also be a normalized image obtained through normalization processing. Since the raw image may be of various image types, wherein for example, the raw image is a red green blue (RGB) image, a hue saturation lightness (hue saturation value, HSV) image, etc. In order to reduce interference of color and luminance of the raw image on the stability and extraction efficiency of the feature point extraction model, referring to FIG. 1, after receiving the raw image, the image input layer in the feature point extraction model may input the raw image into the normalization layer. The normalization layer 102 may convert the raw image into a normalized image. For example, the normalization layer 102 may convert the image to be processed into a grayscale image with pixel values ranging from 0 to 1. The grayscale image is represented as (H, W, 1), wherein H represents the height of the image, W represents the width of the image, and 1 represents that the number of channels of the image is 1.

Those skilled in the art may convert the raw image into a normalized image of another image type, which is not limited in embodiments of the present disclosure. Embodiments of the present disclosure are described taking the image to be processed being a normalized image, and the normalized image being of an image type of a grayscale image with pixel values ranging from 0 to 1 as an example, with other cases being similar thereto and not elaborated.

Step 202, Performing, sequentially through a plurality of feature extraction layers in a feature point extraction model, layer-by-layer feature extraction on the image to be processed, to obtain image feature maps output respectively from the feature extraction layers
Exemplarily, referring to FIG. 1, the plurality of feature extraction layers in the feature point extraction model are arranged in series, forming a hierarchical structure, where an image feature map output from a previous feature extraction layer at a previous level serves as an image feature map input into a following feature extraction layer at a level next thereto, and features are extracted, layer by layer, from the image to be processed in order from shallow to deep levels. Based on this, the electronic device may perform, sequentially through the plurality of feature extraction layers in the feature point extraction model, layer-by-layer feature extraction on the image to be processed, to obtain the image feature maps output respectively from the feature extraction layers. The image feature maps output respectively from the feature extraction layers have different scales and/or different numbers of channels.

It may be understood that the terms "shallow" and "deep" levels are relative concepts. Whether a feature extraction layer is a shallow-level feature extraction layer or a deep-level feature extraction layer is typically determined by a level at which this feature extraction layer is located and feature types of features it extracts. For example, a level at which a shallow-level feature extraction layer is located among the plurality of feature extraction layers is relatively forward, and feature types of features it extracts are typically edge features, texture features, color features, etc.; and a level at which a deep-level feature extraction layer is located among the plurality of feature extraction layers is relatively rearward, and feature types of features it extracts are typically a feature type of shape features, category features, semantic features, etc.

In embodiments of the present disclosure, to enable the feature point extraction model to learn and represent the image to be processed more comprehensively, the feature point extraction model need to extract feature information of different feature types in the image to be processed. Therefore, the feature point extraction model is provided with a plurality of feature extraction layers to perform layer-by-layer feature extraction on the image to be processed. Different feature extraction layers extract features of different feature types, and output image feature maps of different sizes and numbers of channels. Performing step-by-step feature extraction on the image to be processed through the plurality of feature extraction layers enables the feature point extraction model to obtain feature information of different feature types of the image to be processed, thereby enabling the feature point extraction model to learn and represent the image to be processed more comprehensively.

Step 203, Performing, through a plurality of feature fusion layers in the feature point extraction model, layer-by-layer feature fusion on the image feature maps output respectively from the feature extraction layers, to obtain a fused feature map
Exemplarily, referring to FIG. 1, the plurality of feature fusion layers in the feature point extraction model are arranged in series. Based on this, after the feature extraction layers in the feature point extraction model respectively perform layer-by-layer feature extraction on the image to be processed, layer-by-layer feature fusion may further be performed on the image feature maps output respectively from the feature extraction layers through the plurality of feature fusion layers, to obtain a fused feature map.

It may be understood that each feature fusion layer may perform feature fusion on image feature maps output from just two feature extraction layers, or may perform feature fusion on image feature maps output from more than two feature extraction layers, which is not limited in embodiments of the present disclosure. Embodiments of the present disclosure are described taking that each feature fusion layer performs feature fusion on image feature maps output from two feature extraction layers as an example, with other cases being similar thereto and not elaborated.

In embodiments of the present disclosure, in order to retain feature information of different feature types extracted respectively by the feature extraction layers, the feature extraction model is provided with a plurality of feature fusion layers to perform layer-by-layer feature fusion on the image feature maps output respectively from the feature extraction layers, to obtain a fused feature map. Feature information of different feature types extracted respectively by the feature extraction layers at different levels is retained in the fused feature map, such that the target feature point and the descriptor corresponding to the target feature point subsequently determined by the feature point extraction model based on the fused feature map are more accurate.

Furthermore, those skilled in the art may set the number of feature fusion layers based on the number of feature extraction layers for which each feature fusion layer performs feature fusion, which is not limited in embodiments of the present disclosure.

Step 204, Performing feature point extraction on the fused feature map, and determining a target feature point in the image to be processed and a descriptor corresponding to the target feature point

Exemplarily, after obtaining the fused feature map, the electronic device may further perform feature point extraction on the fused feature map, and determine a target feature point in the image to be processed and a descriptor corresponding to the target feature point. In this way, the electronic device may perform a series of tasks such as camera pose estimation, environmental map construction, object detection, tracking, and positioning based on the descriptor corresponding to the target feature point. The process that the electronic device performs feature point extraction on the fused feature map and determine the target feature point in the image to be processed and the descriptor corresponding to the target feature point will be introduced in detail later, and will not be elaborated here.

In embodiments of the present disclosure, an electronic device acquires an image to be processed, and performs, sequentially through a plurality of feature extraction layers in a feature point extraction model, layer-by-layer feature extraction on the image to be processed, to obtain image feature maps output respectively from the feature extraction layers. Then, the electronic device performs, through a plurality of feature fusion layers in the feature point extraction model, layer-by-layer feature fusion on the image feature maps output respectively from the feature extraction layers, to obtain a fused feature map, and performs feature point extraction on the fused feature map, and determines a target feature point in the image to be processed and a descriptor corresponding to the target feature point. In this way, by performing layer-by-layer feature fusion on the image feature maps output respectively from the feature extraction layers, a fused feature map is obtained, thereby retaining feature information in the image feature maps output respectively from the feature extraction layers at different levels, thus improving the computational precision of feature point extraction.

In some embodiments, a non-first feature extraction layer among the plurality of feature extraction layers comprises at least one MBConv layer, the non-first feature extraction layer being any feature extraction layer other than a first feature extraction layer at a first level among the plurality of feature extraction layers.

Exemplarily, mobile inverted bottleneck convolution (MBConv) is an efficient convolution structure designed specifically for a mobile device (such as an edge computing platform). MBConv mainly includes parts as follows:
(1) A 1 * 1 standard convolution layer, configured to perform channel expansion on an input feature map, and typically uses a ReLU6 or SiLU activation function;
(2) A 3 * 3 depthwise separable convolution layer, configured to perform a spatial convolution operation on a feature map obtained by the channel expansion, and typically uses the ReLU6 or SiLU activation function.
(3) A squeeze-and-excitation (SE) layer, configured to weight channels of the feature map, to enhance an important channel and suppress an unimportant channel, and typically includes global average pooling, two fully connected layers, and a Sigmoid activation function.
(4) A 1 * 1 standard convolution layer, configured to perform channel reduction on the feature map.
(5) A residual connection, configured to alleviate gradient vanishing and gradient explosion, and is typically used in case that a number of channels of the input feature map is the same as that of an output feature map and that a stride is 1.

MBConv has the following advantages: (1) an amount of computation is reduced greatly by using depthwise separable convolution, wherein compared with a traditional convolution operation, good feature extraction capability may be maintained while reducing computational cost, making it suitable for scenarios with limited computational resources such as mobile devices; (2) through the inverted bottleneck structure (dimensionality expansion first, then dimensionality reduction) and the attention mechanism of the SE layer, features may be extracted and utilized more effectively, improving the accuracy and generalization capability of the model; and (3) the number of parameters of the model is reduced, a storage requirement of the model and a risk of overfitting are lowered, making the model more lightweight, which facilitates deployment and application.

Computational resources of a graphics processing unit used in an intelligent driving vehicle are limited. To enable the graphics processing unit to meet requirements of high processing speed, low power consumption, and high computational precision during feature point extraction, a feature extraction layer in the feature point extraction model may perform feature extraction on the image to be processed through a MBConv layer. Furthermore, since the first feature extraction layer among the plurality of feature extraction layers is typically configured to map the image to be processed to a low-dimensional image feature map, a traditional convolution structure still needs to be used. Therefore, in embodiments of the present disclosure, a MBConv layer is used in a non-first feature extraction layer among the plurality of feature extraction layers to perform feature extraction on the image to be processed. A non-first feature extraction layer among the plurality of feature extraction layers comprises at least one MBConv layer. For example, referring to FIG. 1, a feature extraction layer 1 includes a 3 * 3 standard convolution layer, a batch normalization layer, and a relu activation function layer; a feature extraction layer 2 includes 3 MBConv layers; a feature extraction layer 3 includes 2 MBConv layers; and a feature extraction layer 4 includes 4 MBConv layers.

It may be understood that those skilled in the art may comprehensively consider factors such as computational resources and power consumption of a graphics processing unit, as well as the level, learning complexity, and feature richness of a feature extraction layer, thereby to set the number of MBConv layers in the non-first feature extraction layer, which is not limited in embodiments of the present disclosure. In addition, those skilled in the art may also replace a MBConv layer with a convolution layer of another type that has the mobile inverted bottleneck convolution structure (such as Fused-MBConv, MOA-T, etc.), which is not limited in embodiments of the present disclosure.

In embodiments of the present disclosure, a non-first feature extraction layer among the plurality of feature extraction layers performs feature extraction on the image to be processed through at least one MBConv layer, fully leveraging the advantages of MBConv such as efficient computational performance, powerful feature extraction capability, and lightweight, so that the graphics processing unit can implement feature point extraction with high processing speed, low power consumption, and high computational precision.

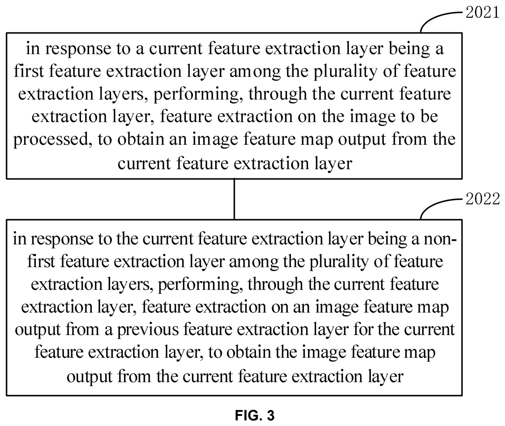

As shown in FIG. 3, based on the embodiment shown in FIG. 2, step 202 may include steps as follows.

Step 2021, In response to a current feature extraction layer being a first feature extraction layer among the plurality of feature extraction layers, performing, through the current feature extraction layer, feature extraction on the image to be processed, to obtain an image feature map output from the current feature extraction layer

Exemplarily, referring to FIG. 1, the plurality of feature extraction layers in the feature point extraction model are arranged in series, forming a hierarchical structure. An image feature map output from a previous feature extraction layer at a previous level serves as an image feature map input into a following feature extraction layer at a level next thereto, and features are extracted, layer by layer, from the image to be processed in order from shallow to deep layers. For example, referring to FIG. 1, the feature extraction layer 1 is at the first level (i.e. the first layer), the feature extraction layer 2 is at the second level, the feature extraction layer 3 is at the third level, and the feature extraction layer 4 is at the fourth level (i.e., the last layer). The image feature map output from the feature extraction layer 1 serves as the image feature map input into the feature extraction layer 2, the image feature map output from the feature extraction layer 2 serves as the image feature map input into the feature extraction layer 3, and the image feature map output from the feature extraction layer 3 serves as the image feature map input into the feature extraction layer 4.

In performing, sequentially through the plurality of feature extraction layers, layer-by-layer feature extraction on the image to be processed, if the current feature extraction layer is the first feature extraction layer among the plurality of feature extraction layers, the input to the current feature extraction layer is the image to be processed. Correspondingly, the current feature extraction layer performs feature extraction on the image to be processed, to obtain the image feature map output from the current feature extraction layer. During feature extraction, the current feature extraction layer adjusts the size of the output image feature map by performing downsampling on the image to be processed, and adjusts the number of channels of the output image feature map through convolution operation. Therefore, compared with the image to be processed, the size and number of channels of the image feature map output from the current feature extraction layer are changed.

For example, referring to FIG. 1, the input to the feature extraction layer 1 is the image to be processed (i.e., the normalized image) output from the normalization layer. The feature extraction layer 1 performs feature extraction on the image to be processed, to obtain the image feature map output from the feature extraction layer 1. Here, the image to be processed is (H, W, 1), and the image feature map output from the feature extraction layer 1 is (H/2, W/2, 40).

Step 2022, In response to the current feature extraction layer being a non-first feature extraction layer among the plurality of feature extraction layers, performing, through the current feature extraction layer, feature extraction on an image feature map output from a previous feature extraction layer for the current feature extraction layer, to obtain the image feature map output from the current feature extraction layer, wherein the image feature maps output respectively from the feature extraction layers have different scales and/or different numbers of channels

Exemplarily, in performing, sequentially through the plurality of feature extraction layers, layer-by-layer feature extraction on the image to be processed, if the current feature extraction layer is a non-first feature extraction layer among the plurality of feature extraction layers, the input to the current feature extraction layer is the image feature map output from the previous feature extraction layer. Correspondingly, the current feature extraction layer performs feature extraction on the image feature map output from the previous feature extraction layer, to obtain the image feature map output from the current feature extraction layer. During feature extraction, the current feature extraction layer adjusts the size of the output image feature map by performing downsampling on the image feature map output from the previous feature extraction layer, and adjusts the number of channels of the output image feature map through convolution operation. Therefore, compared with the image feature map output from the previous feature extraction layer, the size and number of channels of the image feature map output from the current feature extraction layer have changed.

For example, referring to FIG. 1, the input to the feature extraction layer 2 is the image feature map output from the feature extraction layer 1. The feature extraction layer 2 performs feature extraction on the image feature map output from the feature extraction layer 1, to obtain the image feature map output from the feature extraction layer 2. The image feature map output from the feature extraction layer 2 is (H/4, W/4, 24). The input to the feature extraction layer 3 is the image feature map output from the feature extraction layer 2, and the feature extraction layer 3 performs feature extraction on the image feature map output from the feature extraction layer 2, to obtain the image feature map output from the feature extraction layer 3. The image feature map output from the feature extraction layer 3 is (H/8, W/8, 40). The input to the feature extraction layer 4 is the image feature map output from the feature extraction layer 3, and the feature extraction layer 4 performs feature extraction on the image feature map output from the feature extraction layer 3, to obtain the image feature map output from the feature extraction layer 4. The image feature map output from the feature extraction layer 4 is (H/16, W/16, 112).

It may be understood that in embodiments of the present disclosure, sizes of image feature maps output from different feature extraction layers are determined based on convolution kernel sizes, strides, paddings, pooling operations, downsampling operations, etc., in different feature extraction layers. In embodiments of the present disclosure, examples of the sizes of the image feature maps output from different feature extraction layers are for illustration only, rather than for limiting the sizes of the image feature maps. In embodiments of the present disclosure, numbers of channels of the image feature maps output from different feature extraction layers are determined based on feature types, feature richness, and feature complexity of features contained in the image feature maps output from different feature extraction layers. In embodiments of the present disclosure, examples of the numbers of channels of the image feature maps output from different feature extraction layers are for illustration only, rather than for limiting the numbers of channels of the image feature maps.

In embodiments of the present disclosure, layer-by-layer feature extraction is performed on the image to be processed sequentially through a plurality of feature extraction layers in the feature point extraction model. Image feature maps output respectively from the feature extraction layers contain feature information of different feature types, enabling the feature point extraction model to learn and represent the image to be processed more comprehensively, thereby guaranteeing that the processing unit is enabled to implement feature point extraction with high computational precision.

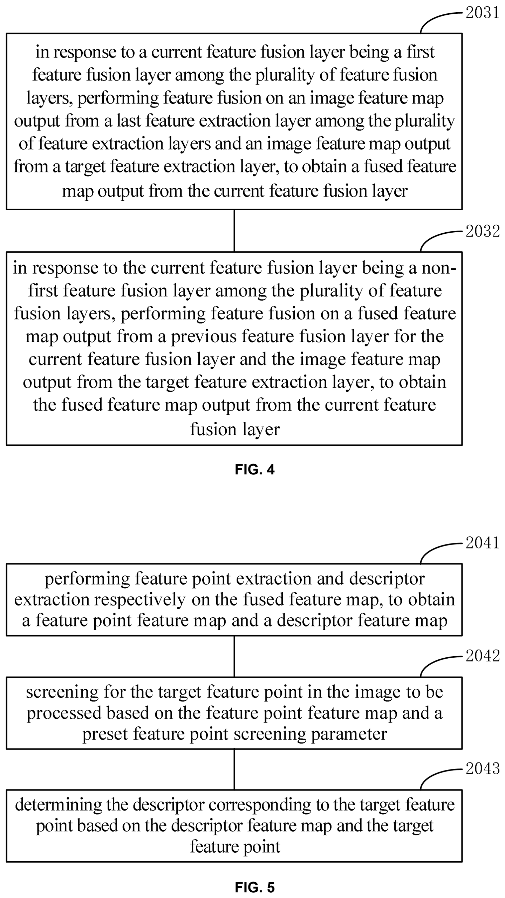

As shown in FIG. 4, based on the embodiment shown in FIG. 2, step 203 may include steps as follows.

Step 2031, In response to a current feature fusion layer being a first feature fusion layer among the plurality of feature fusion layers, performing feature fusion on an image feature map output from a last feature extraction layer among the plurality of feature extraction layers and an image feature map output from a target feature extraction layer, to obtain a fused feature map output from the current feature fusion layer, wherein the target feature extraction layer is a feature extraction layer among the plurality of feature extraction layers that corresponds to the current feature fusion layer, and the first feature fusion layer is a feature fusion layer at first level among the plurality of feature fusion layers

Exemplarily, referring to FIG. 1, the plurality of feature fusion layers in the feature point extraction model are arranged in series, to perform layer-by-layer feature fusion on the image feature maps output respectively from the feature extraction layers, to obtain a fused feature map. For example, referring to FIG. 1, a feature fusion layer 1 is at the first level (i.e., the first layer), a feature fusion layer 2 is at the second level, and a feature fusion layer 3 is at the third level (i.e., the last layer). In some embodiments, each feature fusion layer may include two standard convolution layers, or may include other numbers of standard convolution layers, which is not limited in embodiments of the present disclosure.

Furthermore, for any one feature fusion layer, the feature fusion layer may perform feature fusion on image feature maps output from at least two feature extraction layers. When performing feature fusion on the image feature maps output from at least two feature extraction layers, the feature point extraction model performs feature fusion on the image feature maps output from the feature extraction layers sequentially in order from high to low levels, i.e., first performs feature fusion on image feature maps output from a feature extraction layer at a highest level and a feature extraction layer at a second-highest level, to obtain a higher-level fused feature map, and then, performs feature fusion on the fused feature map and an image feature map output from a feature extraction layer at a third-highest level, to obtain a lower-level fused feature map, and performs layer-by-layer feature fusion in this manner, to finally obtain an all-level fused feature map. The performing feature fusion on an image feature map output from a last feature extraction layer among the plurality of feature extraction layers and an image feature map output from a target feature extraction layer includes: during feature fusion, starting from the last feature extraction layer, sequentially performs feature fusion on the image feature maps output from at least two feature extraction layers in order from high to low levels, wherein the target feature extraction layer is related to the level of the previous feature extraction layer for the current feature fusion, and the level of the target feature extraction layer is lower than the level of the previous feature extraction layer. For example, referring to FIG. 1, the feature fusion layer 1 performs feature fusion on the image feature maps output from the feature extraction layer 4 and the feature extraction layer 3, and then, the target feature extraction layer corresponding to the feature fusion layer 1 is the feature extraction layer 3. The feature fusion layer 2 performs feature fusion on the fused features (i.e., the image feature maps output from the feature extraction layer 4 and the feature extraction layer 3) output from the feature fusion layer 1 and the image feature map output from the feature extraction layer 2, and then, the target feature extraction layer corresponding to the feature fusion layer 2 is the feature extraction layer 2. The feature fusion layer 3 performs feature fusion on the fused features (i.e., the image feature maps output from the feature extraction layer 4, the feature extraction layer 3, and the feature extraction layer 2) output from the feature fusion layer 2 and the image feature map output from the feature extraction layer 1, and then, the target feature extraction layer corresponding to the feature fusion layer 3 is the feature extraction layer 1.

In performing, sequentially through the plurality of feature fusion layers, layer-by-layer feature fusion on the image feature maps output respectively from the feature extraction layers, if the current feature fusion layer is the first feature fusion layer among the plurality of feature fusion layers, the input to the current feature fusion layer is the image feature map output from the last feature extraction layer and the image feature map output from the target feature extraction layer corresponding to the current feature fusion layer. Correspondingly, the current feature fusion layer performs feature fusion on the image feature map output from the last feature extraction layer and the image feature map output from the target feature extraction layer, to obtain the fused feature map output from the current feature fusion layer.

For example, referring to FIG. 1, the input to the feature fusion layer 1 is the image feature map output from the feature extraction layer 4 and the image feature map output from the feature extraction layer 3, the fused feature map output from the feature fusion layer 1 is obtained by the feature fusion through the feature fusion layer 1.

Step 2032, In response to the current feature fusion layer being a non-first feature fusion layer among the plurality of feature fusion layers, performing feature fusion on a fused feature map output from a previous feature fusion layer for the current feature fusion layer and the image feature map output from the target feature extraction layer, to obtain the fused feature map output from the current feature fusion layer, the non-first feature fusion layer being any feature fusion layer other than the first feature fusion layer

Exemplarily, in performing, sequentially through the plurality of feature fusion layers, layer-by-layer feature fusion on the image feature maps output respectively from the feature extraction layers, if the current feature fusion layer is a non-first feature fusion layer among the plurality of feature fusion layers, the input to the current feature fusion layer is the fused feature map output from the previous feature fusion layer and the image feature map output from the target feature extraction layer corresponding to the current feature fusion layer. Correspondingly, the current feature fusion layer performs feature fusion on the fused feature map output from the previous feature fusion layer and the image feature map output from the target feature extraction layer, to obtain the fused feature map output from the current feature fusion layer.

For example, referring to FIG. 1, the input to the feature fusion layer 2 is the fused feature map output from the feature fusion layer 1 and the image feature map output from the feature extraction layer 2, the fused feature map output from the feature fusion layer 2 is obtained by the feature fusion through the feature fusion layer 2. The input to the feature fusion layer 3 is the fused feature map output from the feature fusion layer 2 and the image feature map output from the feature extraction layer 1, the fused feature map output from the feature fusion layer 3 is obtained by the feature fusion through the feature fusion layer 3.

In embodiments of the present disclosure, layer-by-layer feature fusion is performed on the image feature maps output respectively from the feature extraction layers through a plurality of feature fusion layers, to obtain a fused feature map, thereby retaining feature information in the image feature maps output respectively from the feature extraction layers at different levels, thus improving the computational precision of feature point extraction.

In some embodiments, based on the embodiment shown in FIG. 4, before the performing feature fusion on an image feature map output from a last feature extraction layer among the plurality of feature extraction layers and an image feature map output from a target feature extraction layer, the following steps may be included:

Step One, Performing upsampling on the image feature map output from the last feature extraction layer among the plurality of feature extraction layers, to obtain an upsampled image feature map, wherein the upsampled image feature map has a size same as the image feature map output from the target feature extraction layer

Exemplarily, in case the current feature fusion layer is the first feature fusion layer among the plurality of feature fusion layers, before the current feature fusion layer performs feature fusion on the image feature map output from the last feature extraction layer and the image feature map output from the target feature extraction layer, it is necessary to adjust the sizes of the two feature maps, on which the feature fusion is to be performed, to be the same. Therefore, the current feature fusion layer may perform upsampling on the image feature map output from the last feature extraction layer, to obtain an upsampled image feature map, wherein the upsampled image feature map has a size same as the image feature map output from the target feature extraction layer. For example, referring to FIG. 1, the input to the feature fusion layer 1 being the image feature map output from the feature extraction layer 4 and the image feature map output from the feature extraction layer 3, the image feature map output from the feature extraction layer 4 being (H/16, W/16, 112), and the image feature map output from the feature extraction layer 3 being (H/8, W/8, 40), the feature fusion layer 1 performs 2x upsampling on the image feature map output from the feature extraction layer 4, to obtain an upsampled image feature map of (H/8, W/8, 128).

It may be understood that in case the current feature fusion layer is a non-first feature fusion layer among the plurality of feature fusion layers, before the current feature fusion layer performs feature fusion on the fused feature map output from the previous feature fusion layer and the image feature map output from the target feature extraction layer, it is also necessary to adjust the sizes of the two feature maps, on which the feature fusion is to be performed, to be the same. Therefore, the current feature fusion layer may perform upsampling on the fused feature map output from the previous feature fusion layer, to obtain an upsampled fused feature map, wherein the upsampled fused feature map has the same size as the image feature map output from the target feature extraction layer. For example, referring to FIG. 1, the input to the feature fusion layer 2 being the fused feature map output from the feature fusion layer 1 and the image feature map output from the feature extraction layer 2, the fused feature map output from the feature fusion layer 1 being (H/8, W/8, 128), and the image feature map output from the feature extraction layer 2 being (H/4, W/4, 24), the feature fusion layer 2 performs 2x upsampling on the fused feature map output from the feature fusion layer 1, to obtain an upsampled fused feature map of (H/4, W/4, 64). The input to the feature fusion layer 3 being the fused feature map output from the feature fusion layer 2 and the image feature map output from the feature extraction layer 1, the fused feature map output from the feature fusion layer 2 being (H/4, W/4, 64), and the image feature map output from the feature extraction layer 1 is (H/2, W/2, 40), the feature fusion layer 3 performs 2x upsampling on the fused feature map output from the feature fusion layer 2, to obtain an upsampled fused feature map of (H/2, W/2, 32).

It may be understood that in embodiments of the present disclosure, numbers of channels of the fused feature maps output from different feature fusion layers are determined based on feature types, feature richness, and feature complexity of features contained in the fused feature maps output from different feature fusion layers. In embodiments of the present disclosure, examples of the numbers of channels of the fused feature maps output from different feature fusion layers are for illustration only, rather than for limiting the numbers of channels of the fused feature maps.

Step Two, Performing feature fusion on the upsampled image feature map and the image feature map output from the target feature extraction layer, to obtain the fused feature map output from the current feature fusion layer

Exemplarily, in case the current feature fusion layer is the first feature fusion layer among the plurality of feature fusion layers, after performing upsampling on the image feature map output from the last feature extraction layer to obtain the upsampled image feature map, the current feature fusion layer may further perform feature fusion on the upsampled image feature map and the image feature map output from the target feature extraction layer, to obtain the fused feature map output from the current feature fusion layer.

It may be understood that in case the current feature fusion layer is a non-first feature fusion layer among the plurality of feature fusion layers, after performing upsampling on the fused feature map output from the previous feature fusion layer to obtain the upsampled fused feature map, the current feature fusion layer may further perform feature fusion on the upsampled fused feature map and the image feature map output from the target feature extraction layer, to obtain the fused feature map output from the current feature fusion layer.

It should be noted that whether it is two image feature maps or a fused feature map and an image feature map that are fused, the numbers of channels of the two feature maps do not need to be the same, and during feature fusion, it will suffice to concatenate the channels of the two feature maps in the channel direction.

In some embodiments, in case the current feature fusion layer is a last feature fusion layer among the plurality of feature fusion layers, the size of the fused feature map output from the current feature fusion layer is still less than the size of the image to be processed. For example, referring to FIG. 1, the fused feature map output from the feature fusion layer 3 is (H/2, W/2, 32), whereas the image to be processed is (H, W, 1). Therefore, referring to FIG. 1, the electronic device may further perform, through the feature decoding layer in the feature point extraction model, upsampling on the fused feature map output from the last feature fusion layer, to obtain a fused feature map of the same size as the image to be processed. For example, referring to FIG. 1, the fused feature map output from the feature fusion layer 3 being (H/2, W/2, 32), the feature decoding layer may perform 2x upsampling on the fused feature map output from the feature fusion layer 3, to obtain an upsampled fused feature map of (H, W, 16). A feature decoding layer may include two standard convolution layers, or may include other numbers of standard convolution layers, which is not limited in embodiments of the present disclosure.

In embodiments of the present disclosure, before performing feature fusion through a feature fusion layer, the sizes of the feature maps, on which the feature fusion is to be performed, are adjusted to be the same, thereby reducing an alignment error, improving the computational precision of feature point extraction. Meanwhile, in the SuperPoint algorithm, the size of a feature map output from a decoder is 1/8 of the size of an image to be processed, and the feature map output from the decoder needs to be upsampled using a grid sample operator, to obtain a feature map of the same size as the image to be processed. During upsampling, pixel values need to be estimated based on interpolation methods, which may lead to precision loss in pixel values, and the SuperPoint algorithm directly upsamples from 1/8 of the size of the image to be processed to the size of the image to be processed, which will lead to large precision loss. In the present disclosure, during feature fusion, a fused feature map is upsampled step by step, avoiding the problem of large precision loss existing in the SuperPoint algorithm.

As shown in FIG. 5, based on the embodiment shown in FIG. 2, step 204 may include steps as follows.

Step 2041, Performing feature point extraction and descriptor extraction respectively on the fused feature map, to obtain a feature point feature map and a descriptor feature map
Exemplarily, referring to FIG. 1, the feature point extraction model includes a feature point extraction layer and a descriptor extraction layer. The feature point extraction layer may include a 3 * 3 standard convolution layer and a 1 * 1 standard convolution layer which is a 1 * 1 standard convolution layer with a channel number of 1 (i.e., the length of the response value of a feature point). The descriptor extraction layer may include a 3 * 3 standard convolution layer and a 1 * 1 standard convolution layer which is a 1 * 1 standard convolution layer with a channel number of 256 (i.e., the length of the descriptor of the feature point). Of course, those skilled in the art may set the structures of the feature point extraction layer and the descriptor extraction layer according to actual situations, which is not limited in embodiments of the present disclosure.

After obtaining the fused feature map of the same size as the image to be processed, the electronic device may perform feature point extraction on the fused feature map through the feature point extraction layer, i.e., extracting the position, scale, direction, and response value of a feature point, to obtain a feature point feature map. The feature point feature map is (H, W, 1), and the feature point feature map contains the response values corresponding to respective pixels in the image to be processed. Meanwhile, the electronic device may perform descriptor extraction on the fused feature map through the descriptor extraction layer, i.e., extracting local feature information, gradient information, direction information, scale information, feature vectors, etc., of the feature points, to obtain a descriptor feature map. The descriptor feature map is (H, W, 256), and the descriptor feature map contains the descriptors corresponding to the respective pixels in the image to be processed. In some embodiments, after obtaining the descriptor feature map, the electronic device may also perform L2 normalization on the descriptor feature map, to obtain a normalized descriptor feature map.

Step 2042, Screening for the target feature point in the image to be processed based on the feature point feature map and a preset feature point screening parameter
Exemplarily, after obtaining the feature point feature map, the electronic device may further screen out, from pixels contained in the feature point feature map, the target feature point in the image to be processed based on the feature point feature map and a preset feature point screening parameter. That is, when at least one feature point in the feature point feature map match a range of the preset feature point screening parameter, the feature point is determined as the target feature point. The preset feature point screening parameter is configured for screening out, from feature points, the target feature point according to a preset rule or a preset parameter, to filter out a secondary feature point in the feature map with a key feature point being retained, to perform perception based on the key feature point. The preset rule or preset parameter may be set according to actual situations. For example, the preset feature point screening parameter may include a pixel threshold for feature points, or include a preset response value threshold and a preset suppression window size, which is not specifically limited in the present disclosure. The process that the electronic device screens for the target feature point in the image to be processed based on the feature point feature map and the preset feature point screening parameter will be introduced in detail later and will not be elaborated here.

Step 2043, Determining the descriptor corresponding to the target feature point based on the descriptor feature map and the target feature point
Exemplarily, after screening for the target feature point in the image to be processed, the electronic device may further determine the descriptor corresponding to the target feature point based on the descriptor feature map and the target feature point. In this way, the electronic device may perform a series of tasks such as camera pose estimation, environmental map construction, object detection, tracking, and positioning based on the descriptor corresponding to the target feature point. Having determined the target feature point in the image to be processed, for each target feature point, the electronic device may determine, based on coordinates of the target feature point, a descriptor in the descriptor feature map that corresponds to the target feature point.

In embodiments of the present disclosure, through feature point screening, the quality, discriminative ability, and robustness of feature points and descriptors may be significantly improved, thereby improving the performance and efficiency of a subsequent task.

In some embodiments, based on the embodiment shown in FIG. 5, the feature point screening parameter includes a preset response value threshold and a preset suppression window size. Step 2042 may include steps as follows.

Step One, Screening for candidate feature points based on response values corresponding to respective pixels in the feature point feature map and the preset response value threshold

Exemplarily, after obtaining the feature point feature map (H, W, 1), the electronic device may determine, based on channel values corresponding to respective pixels contained in the feature point feature map, response values corresponding to the respective pixels. The response value corresponding to a pixel is a quantitative indicator for measuring whether the pixel is a feature point. The response value of the pixel is generated by computation (such as of gradient, curvature, contrast, etc.) performed on a local pixel region of the pixel, wherein the magnitude of the response value of the pixel directly reflects the significance of the pixel as a feature point. The higher the response value of the pixel is, it is indicated that the stronger the texture, edge, or structural change the pixel has is, and the more likely the pixel is a feature point. Based on this, for each pixel in the feature point feature map, the electronic device may compare the response value corresponding to the pixel with the preset response value threshold. If the response value corresponding to the pixel is greater than the response value threshold, it indicates that the pixel has strong texture, edge, or structural change. Correspondingly, the electronic device may determine the pixel as a candidate feature point. If the response value corresponding to the pixel is less than or equal to the response value threshold, it indicates that the pixel does not have strong texture, edge, or structural change. Correspondingly, the electronic device may determine the pixel as a non-candidate feature point.

Step Two, Determining regions where the candidate feature points are located based on coordinates of the candidate feature points and a preset region size

Exemplarily, in order to quickly remove a redundant candidate feature point, thereby efficiently screening for the target feature point, the electronic device may divide the feature point feature map into a plurality of regions based on a preset region size. The feature point feature map may be represented as (H, W), the region size may be represented as (h, w), and the region number of any one region may be represented as Ar,c , wherein H represents the height of the feature point feature map, W represents the width of the feature point feature map, h represents the height of each region, w represents the width of each region, r represents the row where the region is located, r=1, 2... n, n=H/h, and c represents the column where the region is located, c=1, 2···m, m=W/w. For example, the feature point feature map being (H=20, W=20), and the preset region size being (h=5, w=5), the electronic device divides the feature point feature map into (H/h)*(W/w)=(20/5)(20/5)=16 regions with region numbers being A_{1,1}, A_{1,2}...A_{1,4}, A_{2,1}, A_{2,2} ···A_{2,4} ···A_{4,4}, respectively.

Furthermore, after dividing the feature point feature map into a plurality of regions, for each of the candidate feature points, the electronic device may further compute and round up the quotient of the horizontal coordinate x of the candidate feature point and the height h of each region, and compute and round up the quotient of the vertical coordinate y of the candidate feature point and the width w of each region, thereby determining the region number of the region where the candidate feature point is located. For example, coordinates of a candidate feature point being (x=12, y=11), and the preset region size being (h=5, w=5), the value obtained by computing and rounding up the quotient of the horizontal coordinate x of the candidate feature point and the height h of each region is 3, the value obtained by computing and rounding up the quotient of the vertical coordinate y of the candidate feature point and the width w of each region is 3, and the region number of the region where the candidate feature point is located is A_{3,3}.

It may be understood that a region may contain no candidate feature point, or may contain one or more candidate feature point.

In some embodiments, to achieve efficient management of candidate feature points, after obtaining the region number of the region where a candidate feature point is located, the electronic device may further input the region number of the region into a hash function to obtain a hash value, and map it to a hash table index.

Step Three, Determining, for each of the candidate feature points, the target feature point in the image to be processed based on a first candidate feature point in a first region, a second candidate feature point in a second region, and the preset suppression window size, wherein the first region is a region where the each of the candidate feature points is located, and the second region is a region satisfying a preset proximity condition with the first region
Exemplarily, a suppression window size may be pre-stored in the electronic device. Here, a suppression window refers to a local region where a candidate feature point is located, and is configured to judge whether the candidate feature point is a local maximum within the local region, so as to avoid candidate feature points being overly dense in the local region. The size of the suppression window directly affects the distribution density of feature points. A large suppression window size will result in a sparser distribution of feature points, while a small suppression window size will result in a denser distribution of feature points. Those skilled in the art may set the suppression window size according to actual situations, which is not limited in embodiments of the present disclosure.

After determining the regions where the respective candidate feature points are located, for each of the candidate feature points, the electronic device may further determine all candidate feature points (i.e., first candidate feature points) contained in the region (i.e., the first region) where the candidate feature point is located, and all candidate feature points (i.e., second candidate feature points) contained in regions (i.e., second regions) satisfying a preset proximity condition with the first region. The preset proximity condition may specify the second region being a region adjacent to the first region, or may specify the second region being a region within a range covering a distance of a number of several region sizes from the first region, which is not limited in embodiments of the present disclosure. For example, the first region is A_{2,2}, and the preset proximity condition may specify the second region being a region adjacent to the first region, and then, the second regions are A_{1,1}, A_{1,2}, A_{1,3}, A_{2,1}, A_{2,3}, A_{3,1}, A_{3,2}, and A_{3,3}.

For each first candidate feature point in the first region, the electronic device may compare the response value of the first candidate feature point respectively with the response value of other first candidate feature points and the response values of the second candidate feature points. 1) If, among any of the other first candidate feature points and the second candidate feature points, there is not a third candidate feature point (i.e., any one candidate feature point among the any other first candidate feature points and second candidate feature points) with a response value greater than the response value of the first candidate feature point, it indicates that the response value corresponding to the first candidate feature point is a local maximum within the suppression window. Correspondingly, the electronic device may determine the first candidate feature point as a target feature point. 2) If, among any of the other first candidate feature points and the second candidate feature points, there is a third candidate feature point with a response value greater than the response value of the first candidate feature point, for a respective third candidate feature point, the electronic device may further determine the distance (such as Euclidean distance) between the first candidate feature point and the third candidate feature point based on the coordinates of the first candidate feature point and the coordinates of the third candidate feature point. Then, the electronic device may compare the distance between the first candidate feature point and the respective third candidate feature point with the suppression window size. If the distances between the first candidate feature point and any third candidate feature points are all greater than the suppression window size, it indicates that the response value corresponding to the first candidate feature point is a local maximum within the suppression window. Correspondingly, the electronic device may determine the first candidate feature point as a target feature point. 3) If, among the distances between the first candidate feature point and any third candidate feature points, there is a distance less than or equal to the suppression window size, it indicates that the response value corresponding to the first candidate feature point is not the local maximum within the suppression window. Correspondingly, the electronic device may determine the first candidate feature point as a non-target feature point, and perform non-maximum suppression (NMS) on the first candidate feature point.

That is: for each first candidate feature point in the first region, when Condition One or Condition Two below is satisfied, the first candidate feature point is a target feature point; when Condition Three below is satisfied, the first candidate feature point is a non-target feature point. Conditions One to Three are specifically as follows:
Condition One: among any of the other first candidate feature points and the second candidate feature points, there is no third candidate feature point with a response value greater than the response value of the first candidate feature point.

Condition Two: among any of the other first candidate feature points and the second candidate feature points, there is a third candidate feature point with a response value greater than the response value of the first candidate feature point, and the distances between the first candidate feature point and any third candidate feature points are all greater than the suppression window size.

Condition Three: among any of the other first candidate feature points and the second candidate feature points, there is a third candidate feature point with a response value greater than the response value of the first candidate feature point, and among the any third candidate feature points, there is a third candidate feature point which is at a distance from the first candidate feature point less than the suppression window size.

In embodiments of the present disclosure, the electronic device determines regions where the candidate feature points are located based on coordinates of the candidate feature points and a preset region size, and for each of the candidate feature points, further determines the target feature point in the image to be processed based on the first candidate feature point in the first region where the candidate feature point is located, the second candidate feature points in the second regions satisfying the preset proximity condition with the first region, and the preset suppression window size, thereby avoiding comparison with all other candidate feature points in the feature point feature map during non-maximum suppression, improving a target feature point screening speed. Assume that the feature point feature map contains N candidate feature points. During non-maximum suppression, if comparison between any one candidate feature point and all other candidate feature points in the feature point feature map is performed, the computational complexity is O(N²). However, in the present disclosure, comparison is performed only between a candidate feature point and feature points in a region where the candidate feature point belongs and in any adjacent regions, with computational complexity being O(N), thereby greatly reducing the computational complexity.

In some embodiments, based on the embodiment shown in FIG. 5, step 2043 may include: determining, based on coordinates of the target feature point, a descriptor of a pixel with a coordinate position same as the target feature point among pixels contained in the descriptor feature map as the descriptor corresponding to the target feature point.

Exemplarily, after obtaining the descriptor feature map (H, W, 256), the electronic device may determine, based on channel values corresponding to respective pixels contained in the descriptor feature map, descriptors corresponding to the respective pixels. A descriptor (Feature Descriptor) is a vector configured in computer vision and image processing to characterize the unique texture or structural information of a local region around a feature point. Its core function is to generate a high-dimensional, unique, and robust signature for each feature point, so that feature points can still be effectively matched under different viewpoints, lighting, or occlusion conditions.

The feature point feature map (H, W, 1) output from the feature point extraction layer is a single-channel two-dimensional matrix. The descriptor feature map (H, W, 256) output from the descriptor extraction layer is a multi-channel two-dimensional matrix, wherein one element in a two-dimensional matrix corresponds to one pixel. Since the feature point feature map and the descriptor feature map have the same size, that is, the feature point feature map and the descriptor feature map have the same spatial resolution, the numbers of rows and the numbers of columns of the two-dimensional matrices corresponding to the feature point feature map and the descriptor feature map are also the same. Therefore, the pixels in the feature point feature map and the descriptor feature map are in one-to-one correspondence in terms of spatial positions thereof. Therefore, after determining the target feature point in the image to be processed, for each target feature point, the electronic device may determine, based on the coordinates of the target feature point, the descriptor of a pixel with a coordinate position same as the target feature point among the pixels contained in the descriptor feature map as the descriptor corresponding to the target feature point.

In embodiments of the present disclosure, pixels in the feature point feature map and the descriptor feature map obtained by the electronic device by performing feature point extraction and descriptor extraction respectively on the fused feature map are in one-to-one correspondence. In this way, after determining a target feature point, the electronic device may quickly determine, based on the coordinates of the target feature point, the descriptor in the descriptor feature map that corresponds to the target feature point, thereby improving a descriptor extraction speed.

### Exemplary Apparatus

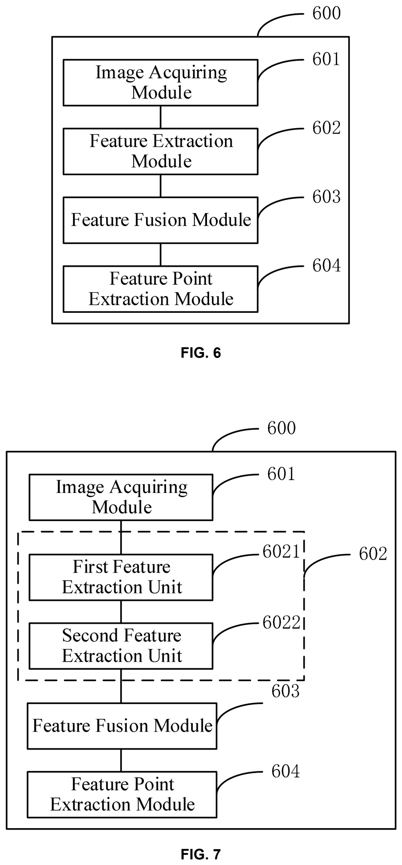

FIG. 6 is a schematic structural diagram of an image processing apparatus according to an exemplary embodiment of the present disclosure. As shown in FIG. 6, the image processing apparatus 600 includes an image acquiring module 601, a feature extraction module 602, a feature fusion module 603, and a feature point extraction module 604.

The image acquiring module 601 is configured to acquire an image to be processed.

The feature extraction module 602 is configured to perform, sequentially through a plurality of feature extraction layers in a feature point extraction model, layer-by-layer feature extraction on the image to be processed, to obtain image feature maps output respectively from the feature extraction layers.

The feature fusion module 603 is configured to perform, through a plurality of feature fusion layers in the feature point extraction model, layer-by-layer feature fusion on the image feature maps output respectively from the feature extraction layers, to obtain a fused feature map.

The feature point extraction module 604 is configured to perform feature point extraction on the fused feature map, and determine a target feature point in the image to be processed and a descriptor corresponding to the target feature point.

In some embodiments, a non-first feature extraction layer among the plurality of feature extraction layers comprises at least one mobile inverted bottleneck convolution MBConv layer.

In some embodiments, as shown in FIG. 7, the feature extraction module 602 includes: a first feature extraction unit 6021 and a second feature extraction unit 6022.

The first feature extraction unit 6021 is configured to, in response to a current feature extraction layer being a first feature extraction layer among the plurality of feature extraction layers, perform, through the current feature extraction layer, feature extraction on the image to be processed, to obtain an image feature map output from the current feature extraction layer.

The second feature extraction unit 6022 is configured to, in response to the current feature extraction layer being a non-first feature extraction layer among the plurality of feature extraction layers, perform, through the current feature extraction layer, feature extraction on an image feature map output from a previous feature extraction layer for the current feature extraction layer, to obtain the image feature map output from the current feature extraction layer, wherein the image feature maps output respectively from the feature extraction layers have different scales and/or different numbers of channels.

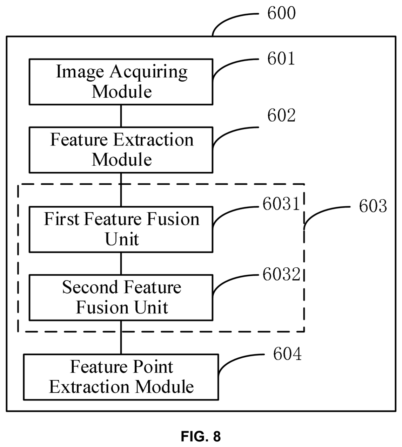

In some embodiments, as shown in FIG. 8, the feature fusion module 603 includes: a first feature fusion unit 6031 and a second feature fusion unit 6032.

The first feature fusion unit 6031 is configured to, in response to a current feature fusion layer being a first feature fusion layer among the plurality of feature fusion layers, perform feature fusion on an image feature map output from a last feature extraction layer among the plurality of feature extraction layers and an image feature map output from a target feature extraction layer, to obtain a fused feature map output from the current feature fusion layer, wherein the target feature extraction layer is a feature extraction layer among the plurality of feature extraction layers that corresponds to the current feature fusion layer.

The second feature fusion unit 6032 is configured to, in response to the current feature fusion layer being a non-first feature fusion layer among the plurality of feature fusion layers, perform feature fusion on a fused feature map output from a previous feature fusion layer for the current feature fusion layer and the image feature map output from the target feature extraction layer, to obtain the fused feature map output from the current feature fusion layer.

In some embodiments, the first feature fusion unit 6031 is further configured to: before the performing feature fusion on an image feature map output from a last feature extraction layer among the plurality of feature extraction layers and an image feature map output from a target feature extraction layer,
perform upsampling on the image feature map output from the last feature extraction layer among the plurality of feature extraction layers, to obtain an upsampled image feature map, wherein the upsampled image feature map has a size same as the image feature map output from the target feature extraction layer; and
the performing feature fusion on an image feature map output from a last feature extraction layer among the plurality of feature extraction layers and an image feature map output from a target feature extraction layer, to obtain a fused feature map output from the current feature fusion layer comprises:
performing feature fusion on the upsampled image feature map and the image feature map output from the target feature extraction layer, to obtain the fused feature map output from the current feature fusion layer.

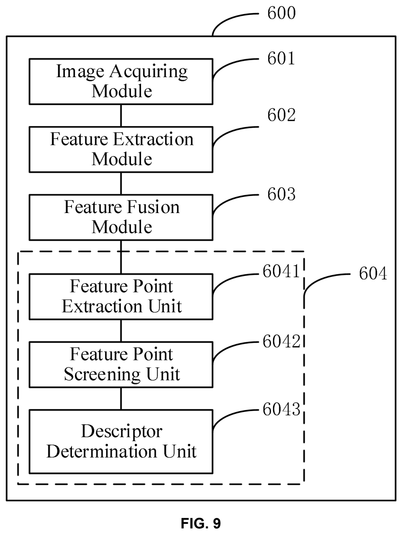

In some embodiments, as shown in FIG. 9, the feature point extraction module 604 includes: a feature point extraction unit 6041, a feature point screening unit 6042, and a descriptor determination unit 6043.

The feature point extraction unit 6041 is configured to perform feature point extraction and descriptor extraction respectively on the fused feature map, to obtain a feature point feature map and a descriptor feature map.

The feature point screening unit 6042 is configured to screen for the target feature point in the image to be processed based on the feature point feature map and a preset feature point screening parameter.

The descriptor determination unit 6043 is configured to determine the descriptor corresponding to the target feature point based on the descriptor feature map and the target feature point.

In some embodiments, the feature point screening parameter comprises a preset response value threshold and a preset suppression window size.

The feature point screening unit 6042 is specifically configured to:
screen for candidate feature points based on response values corresponding to respective pixels in the feature point feature map and the preset response value threshold;
determine regions where the candidate feature points are located based on coordinates of the candidate feature points and a preset region size; and
determine, for each of the candidate feature points, the target feature point in the image to be processed based on a first candidate feature point in a first region, a second candidate feature point in a second region, and the preset suppression window size, wherein the first region is a region where the each of the candidate feature points is located, and the second region is a region satisfying a preset proximity condition with the first region.

In some embodiments, the descriptor determination unit 6043 is specifically configured to:
determine, based on coordinates of the target feature point, a descriptor of a pixel with a coordinate position same as the target feature point among pixels contained in the descriptor feature map as the descriptor corresponding to the target feature point.

For beneficial technical effects corresponding to an exemplary apparatus embodiment, one may refer to the corresponding beneficial technical effects in the Exemplary Method section, which will not be repeated here.

### Exemplary Electronic Device

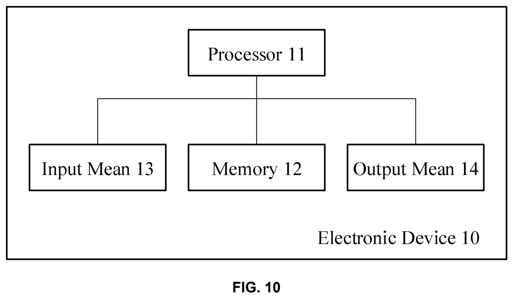

FIG. 10 is a structural diagram of an electronic device according to an embodiment of the present disclosure, including at least one processor 11 and a memory 12.

The processor 11 may be a Central Processing Unit (CPU) or other forms of processing units with data processing capability and/or instruction execution capability, and can control other components in the electronic device 10 to perform desired functions.

The memory 12 may include one or more computer program products. The computer program products may include various forms of computer-readable storage media, such as volatile memory and/or non-volatile memory. The volatile memory may include, for example, Random Access Memory (RAM) and/or cache memory. The non-volatile memory may include, for example, Read-Only Memory (ROM), hard disk, flash memory, etc. One or more computer program instructions may be stored on a computer-readable storage medium. The processor 11 may run the one or more computer program instructions, to implement the image processing method of the embodiments of the present disclosure described above and/or other desired functions.

In an example, the electronic device 10 may further include: an input mean 13 and an output mean 14. These components are interconnected through a bus system and/or other forms of connection mechanisms (not shown).

The input mean 13 may further include, for example, a keyboard, a mouse, etc.

The output mean 14 may output various information to the outside, and may include, for example, a display, a loudspeaker, a printer, and a communication network and remote output means connected thereto.

Of course, for simplicity, FIG. 10 shows only some of the components in the electronic device 10 related to the present disclosure, omitting components such as buses, input/output interfaces, etc. In addition, according to specific application situations, the electronic device 10 may further include any other appropriate components.

### Exemplary Computer Program Product and Computer-Readable Storage Medium

In addition to the above methods and devices, embodiments of the present disclosure may further provide a computer program product, including computer program instructions, wherein the computer program instructions, when run by a processor, cause the processor to execute the steps of the image processing method of the embodiments of the present disclosure described in the Exemplary Method section above.

In the computer program product, a program code configured to execute operations of embodiments of the present disclosure may be written in any combination of one or more programming languages. The programming languages include object-oriented programming languages such as Java, C++, etc., and also include conventional procedural programming languages such as the "C" language or similar programming languages. The program code may be executed entirely on a user computing device, partly on a user device, as a standalone software package, partly on a user computing device and partly on a remote computing device, or entirely on a remote computing device or server.

In addition, embodiments of the present disclosure may also be a computer-readable storage medium, on which computer program instructions are stored, wherein the computer program instructions, when run by a processor, cause the processor to execute the steps of the image processing method of the embodiments of the present disclosure described in the Exemplary Method section above.

The computer-readable storage medium may adopt any combination of one or more readable media. The readable medium may be a readable signal medium or a readable storage medium. The readable storage medium may be, for example but not limited to, an electrical, magnetic, optical, electromagnetic, infrared, or semiconductor system, apparatus, or device, or any combination of the above. More specific examples (a non-exhaustive list) of the readable storage medium include: an electrical connection having one or more wires, a portable disk, a hard disk, a Random Access Memory (RAM), a Read-Only Memory (ROM), an Erasable Programmable Read-Only Memory (EPROM or flash memory), an optical fiber, a portable Compact Disc Read-Only Memory (CD-ROM), an optical storage device, a magnetic storage device, or any suitable combination of the above.

The basic principles of the present disclosure have been described above in connection with specific embodiments. However, it should be noted that the advantages, advantages, effects, etc. mentioned in the present disclosure are for illustration only, rather than for limiting, and cannot be considered as necessary for the embodiments of the present disclosure. In addition, the specific details disclosed above are only for the purpose of illustration and ease of understanding, and are not limitations. The above details do not limit the present disclosure to be implemented with the above specific details.

Those skilled in the art may make various modifications and variations to the present disclosure without departing from the spirit and scope of this application. Thus, if these modifications and variations of this application fall within the scope of the claims of the present disclosure and their equivalent technologies, the present disclosure is also intended to include these modifications and variations.

## Claims

1. An image processing method, **characterized by** comprising:
acquiring (201) an image to be processed;
performing (202), sequentially through a plurality of feature extraction layers in a feature point extraction model, layer-by-layer feature extraction on the image to be processed, to obtain image feature maps output respectively from the feature extraction layers;
performing (203), through a plurality of feature fusion layers in the feature point extraction model, layer-by-layer feature fusion on the image feature maps output respectively from the feature extraction layers, to obtain a fused feature map; and
performing (204) feature point extraction on the fused feature map, and determining a target feature point in the image to be processed and a descriptor corresponding to the target feature point.

2. The method according to claim 1, wherein a non-first feature extraction layer among the plurality of feature extraction layers comprises at least one mobile inverted bottleneck convolution MBConv layer.

3. The method according to claim 1 or 2, wherein the performing (202), sequentially through a plurality of feature extraction layers in a feature point extraction model, layer-by-layer feature extraction on the image to be processed, to obtain image feature maps output respectively from the feature extraction layers comprises:
in response to a current feature extraction layer being a first feature extraction layer among the plurality of feature extraction layers, performing (2021), through the current feature extraction layer, feature extraction on the image to be processed, to obtain an image feature map output from the current feature extraction layer; and
in response to the current feature extraction layer being a non-first feature extraction layer among the plurality of feature extraction layers, performing (2022), through the current feature extraction layer, feature extraction on an image feature map output from a previous feature extraction layer for the current feature extraction layer, to obtain the image feature map output from the current feature extraction layer, wherein the image feature maps output respectively from the feature extraction layers have different scales and/or different numbers of channels.

4. The method according to claim 1, wherein the performing (203), through a plurality of feature fusion layers in the feature point extraction model, layer-by-layer feature fusion on the image feature maps output respectively from the feature extraction layers, to obtain a fused feature map comprises:
in response to a current feature fusion layer being a first feature fusion layer among the plurality of feature fusion layers, performing (2031) feature fusion on an image feature map output from a last feature extraction layer among the plurality of feature extraction layers and an image feature map output from a target feature extraction layer, to obtain a fused feature map output from the current feature fusion layer, wherein the target feature extraction layer is a feature extraction layer among the plurality of feature extraction layers that corresponds to the current feature fusion layer; and
in response to the current feature fusion layer being a non-first feature fusion layer among the plurality of feature fusion layers, performing (2032) feature fusion on a fused feature map output from a previous feature fusion layer for the current feature fusion layer and the image feature map output from the target feature extraction layer, to obtain the fused feature map output from the current feature fusion layer.

5. The method according to claim 4, further comprising: before the performing (2031) feature fusion on an image feature map output from a last feature extraction layer among the plurality of feature extraction layers and an image feature map output from a target feature extraction layer,
performing upsampling on the image feature map output from the last feature extraction layer among the plurality of feature extraction layers, to obtain an upsampled image feature map, wherein the upsampled image feature map has a size same as the image feature map output from the target feature extraction layer; and
the performing (2031) feature fusion on an image feature map output from a last feature extraction layer among the plurality of feature extraction layers and an image feature map output from a target feature extraction layer, to obtain a fused feature map output from the current feature fusion layer comprises:
performing feature fusion on the upsampled image feature map and the image feature map output from the target feature extraction layer, to obtain the fused feature map output from the current feature fusion layer.

6. The method according to claim 1, wherein the performing (204) feature point extraction on the fused feature map, and determining a target feature point in the image to be processed and a descriptor corresponding to the target feature point comprises:
performing (2041) feature point extraction and descriptor extraction respectively on the fused feature map, to obtain a feature point feature map and a descriptor feature map;
screening (2042) for the target feature point in the image to be processed based on the feature point feature map and a preset feature point screening parameter; and
determining (2043) the descriptor corresponding to the target feature point based on the descriptor feature map and the target feature point.

7. The method according to claim 6, wherein the feature point screening parameter comprises a preset response value threshold and a preset suppression window size; and
the screening (2042) for the target feature point in the image to be processed based on the feature point feature map and a preset feature point screening parameter comprises:
screening for candidate feature points based on response values corresponding to respective pixels in the feature point feature map and the preset response value threshold;
determining regions where the candidate feature points are located based on coordinates of the candidate feature points and a preset region size; and
determining, for each of the candidate feature points, the target feature point in the image to be processed based on a first candidate feature point in a first region, a second candidate feature point in a second region, and the preset suppression window size, wherein the first region is a region where the each of the candidate feature points is located, and the second region is a region satisfying a preset proximity condition with the first region.

8. The method according to claim 6, wherein the determining (2043) the descriptor corresponding to the target feature point based on the descriptor feature map and the target feature point comprises:
determining, based on coordinates of the target feature point, a descriptor of a pixel with a coordinate position same as the target feature point among pixels contained in the descriptor feature map as the descriptor corresponding to the target feature point.

9. An image processing apparatus, **characterized by** comprising:
an image acquiring module (601), configured to acquire an image to be processed;
a feature extraction module (602), configured to perform, sequentially through a plurality of feature extraction layers in a feature point extraction model, layer-by-layer feature extraction on the image to be processed, to obtain image feature maps output respectively from the feature extraction layers;
a feature fusion module (603), configured to perform, through a plurality of feature fusion layers in the feature point extraction model, layer-by-layer feature fusion on the image feature maps output respectively from the feature extraction layers, to obtain a fused feature map; and
a feature point extraction module (604), configured to perform feature point extraction on the fused feature map, and determine a target feature point in the image to be processed and a descriptor corresponding to the target feature point.

10. The image processing apparatus according to claim 9, wherein a non-first feature extraction layer among the plurality of feature extraction layers comprises at least one mobile inverted bottleneck convolution MBConv layer.

11. The image processing apparatus according to claim 9 or 10, wherein the feature extraction module (602) comprises:
a first feature extraction unit (6021), configured to, in response to a current feature extraction layer being a first feature extraction layer among the plurality of feature extraction layers, perform, through the current feature extraction layer, feature extraction on the image to be processed, to obtain an image feature map output from the current feature extraction layer; and
a second feature extraction unit (6022), configured to, in response to the current feature extraction layer being a non-first feature extraction layer among the plurality of feature extraction layers, perform, through the current feature extraction layer, feature extraction on an image feature map output from a previous feature extraction layer for the current feature extraction layer, to obtain the image feature map output from the current feature extraction layer, wherein the image feature maps output respectively from the feature extraction layers have different scales and/or different numbers of channels.

12. The image processing apparatus according to claim 9, wherein the feature fusion module (603) comprises:
a first feature fusion unit (6031), configured to, in response to a current feature fusion layer being a first feature fusion layer among the plurality of feature fusion layers, perform feature fusion on an image feature map output from a last feature extraction layer among the plurality of feature extraction layers and an image feature map output from a target feature extraction layer, to obtain a fused feature map output from the current feature fusion layer, wherein the target feature extraction layer is a feature extraction layer among the plurality of feature extraction layers that corresponds to the current feature fusion layer; and
a second feature fusion unit (6032), configured to, in response to the current feature fusion layer being a non-first feature fusion layer among the plurality of feature fusion layers, perform feature fusion on a fused feature map output from a previous feature fusion layer for the current feature fusion layer and the image feature map output from the target feature extraction layer, to obtain the fused feature map output from the current feature fusion layer.

13. The image processing apparatus according to claim 9, wherein the feature point extraction module (604) comprises:
a feature point extraction unit (6041), configured to perform feature point extraction and descriptor extraction respectively on the fused feature map, to obtain a feature point feature map and a descriptor feature map;
a feature point screening unit (6042), configured to screen for the target feature point in the image to be processed based on the feature point feature map and a preset feature point screening parameter; and
a descriptor determination unit (6043), configured to determine the descriptor corresponding to the target feature point based on the descriptor feature map and the target feature point.

14. A non-transitory computer-readable storage medium, on which a computer program is stored, **characterized by** that the computer program, when executed by a processor (11), causes the processor (11) to implement the image processing method according to any one of claims 1 to 8.

15. An electronic device (10), **characterized by** comprising:
a processor (11); and
a memory (12), configured to store processor-executable instructions,
wherein the processor (11) is configured to read the executable instructions from the memory (12), and execute the instructions to implement the image processing method according to any one of claims 1 to 8.
